# EUROPÄISCHE PATENTSCHRIFT

(11) **EP 2 236 779 B1**
(45) Veröffentlichungstag und Bekanntmachung des Hinweises auf die Patenterteilung: **04.01.2012**
(21) Anmeldenummer: 10155923.5
(22) Anmeldetag: 09.03.2010
(51) Int. Cl.: F01M 11/00, F01M 11/03, B01D 27/08, B01D 35/00, B01D 35/153

(54) **Mit Filter und anderen Bauteilen integrierte Ölwanne**
Oil sump with integrated filter and other components
Carter intégré avec un filtre et autres composants

(30) Priorität: 12.03.2009 US 402870
(43) Veröffentlichungstag der Anmeldung: 06.10.2010
(73) Patentinhaber: Mahle International GmbH, 70376 Stuttgart (DE)
(72) Erfinder: Belanger, Ken, St. Clair, MI 48079 (US); Jensen, Hans, 73265 Dettingen (DE); Xia, Zhouxuan, Windsor Ontario N9G 2R5 (CA)
(74) Vertreter: BRP Renaud & Partner

(56) Entgegenhaltungen:
- EP-A2- 1 878 884
- DE-A1- 19 746 704
- DE-A1-102006 032 795
- DE-A1-102007 040 666
- JP-A- 63 131 812

## Beschreibung

### ALLGEMEINER STAND DER TECHNIK

Kurbelgehäuse von Verbrennungskraftmaschinen werden typischerweise mit Motorölen oder anderen Schmiermitteln geschmiert. Das Öl wird häufig in einem Behälter unterhalb des Motors gehalten, der einen selektiven Zugang zu dem Behälter ermöglicht, z.B. um ein Ablassen oder Austauschen des Öls oder Schmiermittels zu ermöglichen. Da Motoröle mit Schmutz, Feuchtigkeit oder anderen Teilchen, die sonst den Motorbetrieb stören würden, verunreinigt werden, ist es notwendig, das Öl während des Motorbetriebs zu filtern.

Ölfilter sind üblicherweise an eine Ölwanne angebaut, in welcher der Ölvorrat gehalten wird. Die Ölfilter verlängern im Allgemeinen die Motorlebensdauer durch Aussieben von Verunreinigungen aus dem Öl, aber es ist dennoch notwendig, das Öl in regelmäßigen Zeitabständen aus dem Motor abzulassen und durch frisches Öl auszutauschen. Ferner müssen auch die Filter selbst in regelmäßigen Zeitabständen ausgetauscht werden, wenn sie zu sehr mit Verunreinigungen verstopft werden.

Der Vorgang des Ablassens einer Motorölwanne oder eines Kurbelgehäuses erfordert häufig ein Ablassen der Ölwanne und danach ein Entfernen des Ölfilters, nachdem das Öl im Wesentlichen aus der Wanne abgelassen ist. Unglücklicherweise verbleibt nahezu immer etwas Öl innerhalb des Filters und unmittelbar angrenzender Bereiche, was gelegentlich zu Verschütten des verbleibenden Öls führt, wenn der Filter entfernt wird.

Dementsprechend besteht ein Bedarf an einer Ölwannenbaugruppe, die eine vereinfachte Wartung einer Motorölversorgung ermöglicht.

### KURZE BESCHREIBUNG DER ZEICHNUNGEN

Während die Ansprüche nicht auf die illustrierten Ausführungsformen begrenzt sind, ist eine Würdigung der verschiedenen Aspekte am besten durch eine Erörterung verschiedener Beispiele derselben zu gewinnen. Unter Bezugnahme auf die Zeichnungen werden nun illustrative Ausführungsformen im Detail gezeigt. Obwohl die Zeichnungen die Ausführungsformen darstellen, sind die Zeichnungen nicht notwendigerweise maßstabsgetreu, und bestimmte Merkmale können übertrieben sein, um einen innovativen Aspekt einer Ausführungsform besser zu illustrieren und zu erläutern. Ferner ist nicht beabsichtigt, dass die hierin beschriebenen Ausführungsformen erschöpfend oder auf eine andere Weise auf die genaue Form und Konfiguration begrenzend oder einschränkend sind, die in den Zeichnungen gezeigt und in der folgenden ausführlichen Beschreibung offenbart werden. Ausführungsbeispiele der vorliegenden Erfindung werden im Detail beschrieben unter Bezugnahme auf die folgenden Zeichnungen.

Fig. 1A ist eine perspektivische Ansicht einer beispielhaften Ölwannenbaugruppe,

Fig. 1B ist eine andere perspektivische Ansicht einer beispielhaften Ölwannenbaugruppe,

Fig. 2 ist eine Schnittansicht der beispielhaften Ölwannenbaugruppe von Fig. 1A und 1B, und

Fig. 3 ist eine vergrößerte perspektivische Ansicht eines oberen Wannenabschnitts der in Fig. 1A und 1B gezeigten beispielhaften Ölwannenbaugruppe.

### DETAILLIERTE BESCHREIBUNG

In der Beschreibung bedeutet eine Bezugnahme auf "eine beispielhafte Illustration" und ein "Beispiel" oder einen ähnlichen Ausdruck, dass ein bestimmtes Merkmal, eine Struktur oder eine Eigenschaft, die in Verbindung mit der beispielhaften Herangehensweise beschrieben wird, in wenigstens einer Illustration eingeschlossen ist. Das Erscheinen der Wendung "in einer Illustration" oder eines Ausdrucks ähnlicher Art an verschiedenen Stellen in der Beschreibung bezieht sich nicht notwendigerweise immer auf die gleiche Illustration oder das gleiche Beispiel.

Nach verschiedenen beispielhaften Illustrationen wird eine Ölwannenbaugruppe beschrieben, die einen Ölfilter und eine Ölwanne, die den Filter aufnimmt, einschließt. Die Ölwanne schließt einen Behälter, der eine Ablassöffnung zum selektiven Ablassen von Fluid aus der Ölwanne definiert, und eine Wand, die einen Filterhohlraum in Fluidverbindung mit einem Aufnahmedurchgang und einem Abgabedurchgang der Ölwanne definiert, ein. Der Aufnahmedurchgang ermöglicht eine Fluidverbindung von dem Behälter zu dem Filterhohlraum, und der Abgabedurchgang ermöglicht eine Fluidverbindung von dem Filterhohlraum zu dem Behälter. Die Ölwanne schließt ferner eine Filterabdeckungsbaugruppe ein, die eine Abdeckung, die den Ölfilter innerhalb des Filterhohlraums befestigt, eine Filterablassröhre, die sich von der Abdeckung durch den Filterhohlraum und in einen Ablassdurchgang erstreckt, und einen an der Filterablassröhre angeordneten Stopfen, wobei der Stopfen selektiv den Ablassdurchgang abdichtet, einschließt. Der Ablassdurchgang ermöglicht eine Fluidverbindung zwischen dem Filterhohlraum und dem Behälter. Die Filterablassröhre ist dafür konfiguriert, gefiltertes Öl von dem Ölfilter aufzunehmen.

Die Ölwannenbaugruppe ermöglicht es im Allgemeinen, dass ein Ölfilter in einer umgedrehten Stellung in der Ölwanne angeordnet wird, wobei das Öl aus dem Filter unmittelbar in die Wanne abläuft, wo es weiter aus der Ölwanne abgelassen werden kann. Die Ölwannenbaugruppe ermöglicht daher ein vereinfachtes Ablassen des Filters und der Ölwanne und verringert das Verschütten, das sonst während des Entfernens des Filters aus der Ölwanne auftreten kann, auf ein Minimum.

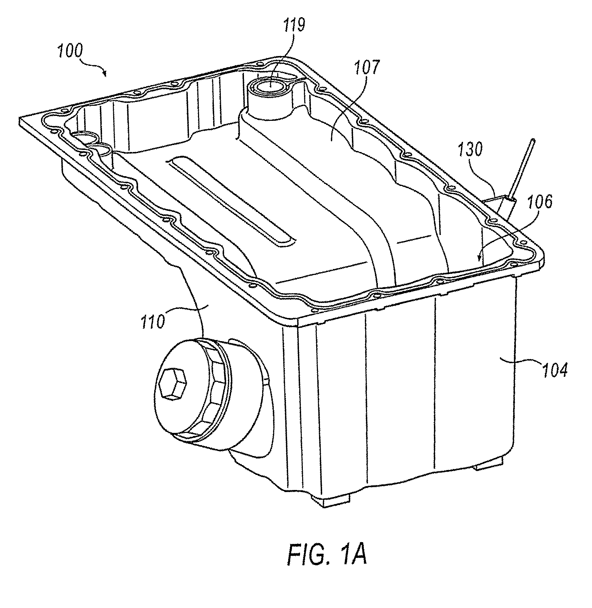

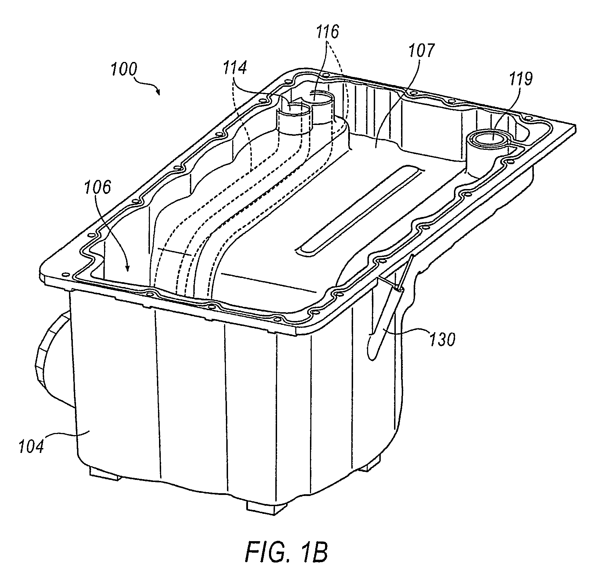

Nunmehr Fig. 1A und 1B zugewandt, wird eine Ölwannenbaugruppe 100 gezeigt. Die Ölwannenbaugruppe 100 schließt einen Ölfilter 102 und eine Ölwanne 104, die den Filter 102 aufnimmt, ein. Die Ölwanne 104 schließt im Allgemeinen einen Behälter 106 und eine obere Wanne 107 ein. Der Behälter 106 ist im Allgemeinen ein Hauptbehälter der Ölwanne 104, wo Öl oder andere Schmiermittel zum Schmieren eines Motor-Kurbelgehäuses (nicht gezeigt) zurückgehalten werden. Die obere Wanne 107 ist im Allgemeinen dafür konfiguriert, zu ermöglichen, dass jegliches Öl oder andere Schmiermittel in dem Hauptbehälter 106 verbleiben. Öl oder andere Schmiermittel werden vorzugsweise aus einem unteren Abschnitt des Hauptbehälters 106 in das Motor-Kurbelgehäuse gepumpt. Wie weiter unten beschrieben wird, schließt die obere Wanne 107 Durchgänge ein, um Öl von dem Behälter 106 zu dem Ölfilter 102 und umgekehrt zu pumpen, als Teil der durch die Ölwanne 104 gewährleisteten Ölfilterungsfunktion.

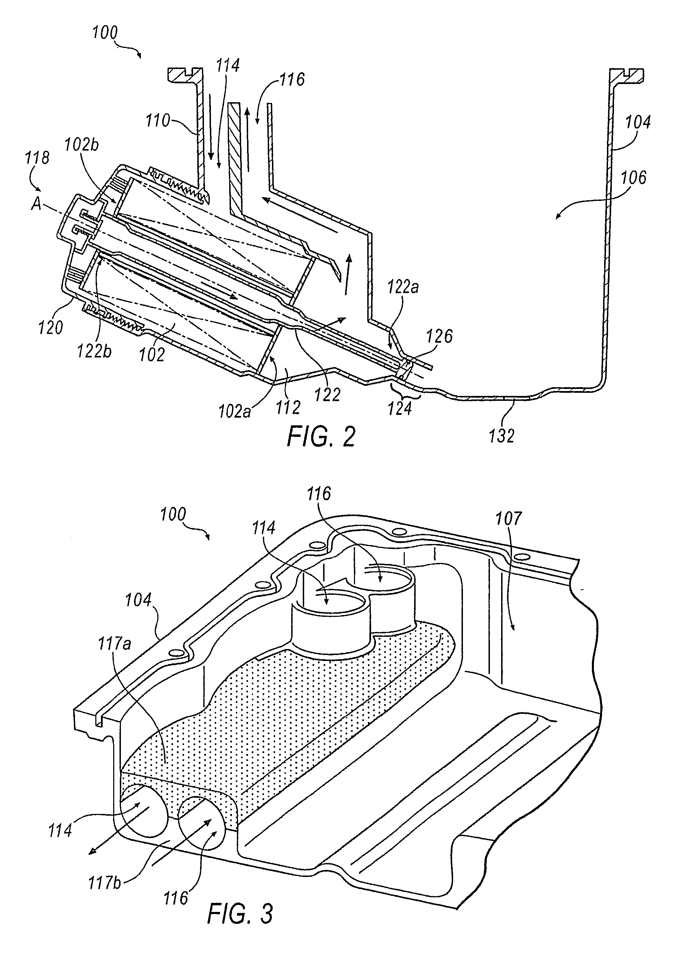

Nunmehr Fig. 2 zugewandt, schließt die Ölwanne 104 eine Wand 110 ein, die zum Teil einen Filterhohlraum 112 definiert. Der Filterhohlraum 112 steht in Fluidverbindung mit einem Aufnahmedurchgang 114 und einem Abgabedurchgang 116 der Ölwanne 104. Der Aufnahmedurchgang 114 kann, wie am besten in Fig. 2 zu sehen ist, im Allgemeinen dafür verwendet werden, das Öl aus dem Behälter 106 zu dem Filter 102 zu verteilen, d.h., um das Öl im Allgemeinen zu filtern. Der Abgabedurchgang 116 kann im Allgemeinen dafür verwendet werden, das gefilterte Öl von dem Filterhohlraum 112 zurück zu dem Behälter 106 abzugeben. Mit anderen Worten, der Aufnahmedurchgang 114 ermöglicht im Allgemeinen eine Fluidverbindung von dem Behälter 106 zu dem Filterhohlraum 112. Umgekehrt ermöglicht der Abgabedurchgang 116 im Allgemeinen eine Fluidverbindung von dem Filterhohlraum 112 zurück zu dem Behälter 106. Der Aufnahmedurchgang kann folglich, z.B. durch Pumpen, selektiv Fluid von dem Behälter 106 zu einem Filtereinlass des Ölfilters 102 weiterleiten, wenn der Ölfilter 102 innerhalb des Filterhohlraums 112 befestigt ist. Der Abgabedurchgang 116 leitet umgekehrt, z.B. durch Pumpen, selektiv Fluid von dem Filterhohlraum 112 zurück zu dem Behälter 106. Eine oder mehrere Pumpen (nicht gezeigt) können bereitgestellt werden, um Öl oder andere Schmiermittel von dem Behälter 106 zu dem Filter 102, aus dem Filter 102 in den Filterhohlraum 112 und von dem Filterhohlraum 112 zurück zu dem Behälter 106 zu pumpen, wie es im Allgemeinen durch die Pfeile in Fig. 2 angezeigt wird. Das Öl aus dem Behälter 106 wird im Allgemeinen durch eine gesamte Motorölstrecke umgewälzt, um innere Teile des Motors zu schmieren. Der Abgabedurchgang 116 ermöglicht folglich ein selektives Weiterleiten von Fluid von einem Fluidauslass des Ölfilters 102, wenn der Ölfilter 102 in dem Filterhohlraum 112 befestigt ist. Dadurch liefert der Abgabedurchgang 116 gefiltertes Öl an den Behälter zum Umwälzen um den Motor, z.B. über einen Motoröl-Weiterleitungsdurchgang 119. Nach dem Umlauf durch den Motor kann das Öl zum Filtern zu dem Behälter 106 zurückgeführt werden. Das Öl aus dem Behälter 106 kann über den Aufnahmedurchgang 117 durch den Filter 102 gepumpt werden. Eine Pumpe (nicht gezeigt) kann in dem Behälter 106 bereitgestellt werden, um das Öl durch die gesamte Ölwannenbaugruppe 100 und/oder einen zugeordneten Motor umzuwälzen. Ferner können Temperatur- und/oder Drucksensoren in der Ölwanne 104 bereitgestellt werden, um im Allgemeinen Öltemperatur und -druck zu überwachen. Wie am besten in Fig. 1A, 1B und 3 zu sehen ist, werden der Abgabe- und der Aufnahmedurchgang 116, 114 jeweils zum Teil durch eine obere Durchgangshälfte 117a definiert, die, wie weiter unten beschrieben wird, an einer unteren Durchgangshälfte 117b befestigt ist.

Wie am besten in Fig. 2 zu sehen ist, hält eine Filterabdeckungsbaugruppe 118 im Allgemeinen den Ölfilter 102 innerhalb des Filterhohlraums 112 fest. Die Filterabdeckungsbaugruppe 118 kann im Allgemeinen eine Abdeckung 120 einschließen, die den Ölfilter 102 innerhalb des Filterhohlraums 112 befestigt. Die Filterabdeckungsbaugruppe 118 schließt ferner eine Filterablassröhre 122 ein, die sich von der Abdeckung 120 durch den Filterhohlraum 112 und in einen durch die Ölwanne 104 definierten Ablassdurchgang 124 erstreckt.

Die Filterablassröhre 122 kann im Allgemeinen eine Achse A haben, die sich von der Abdeckung 120 durch den Filterhohlraum 112 und in den Ablassdurchgang 124 erstreckt. Der Ablassdurchgang 124 ermöglicht eine Fluidverbindung zwischen dem Filterhohlraum 112 und dem Behälter 106. Die Filterablassröhre 122 ist im Allgemeinen dafür konfiguriert, gefiltertes Öl von dem Ölfilter 102 aufzunehmen. Zum Beispiel kann der Ölfilter 102 im Allgemeinen das Öl von einer Ölpumpe (nicht gezeigt) empfangen, die das Öl von dem Behälter 106 zu dem Ölfilter 102 pumpt, wobei der Filter das Öl an einer in Radialrichtung äußersten Fläche des Ölfilters 102, z.B. angrenzend an den Aufnahmedurchgang 114, aufnimmt. Das Öl kann im Allgemeinen durch den Ölfilter 102 zu einem in Radialrichtung mittigen Abschnitt des Filters 102 hin, angrenzend an die Filterablassröhre 122 und/oder die Achse A, strömen. Die Filterablassröhre 122 kann mit einem Sieb versehen oder auf eine andere Weise mit Öffnungen versehen sein, um gefiltertes Öl von dem Ölfilter 102 aufzunehmen. Das gefilterte Öl kann danach im Allgemeinen die Filterablassröhre 122 hinab zu einem Ende der Filterablassröhre 122 hin strömen, das der Abdeckung im Allgemeinen gegenüberliegt. Danach kann das gefilterte Öl aus der Filterablassröhre, z.B. durch eine oder mehrere Öffnungen in der Filterablassröhre 122, und in den Filterhohlraum 112 abgelassen werden. Das gefilterte Öl kann danach über den Abgabedurchgang 116 von dem Ölfilter 102 weggepumpt werden, wobei das Öl zurück zu den gewünschten Bereichen des Motors gepumpt wird. Das Öl kann folglich ununterbrochen durch den Motor umgewälzt werden, wobei es schließlich zum Filtern zu dem Behälter 106 zurückkehrt.

Die Filterablassröhre 122 kann mit einem Stopfen 126 versehen sein, der selektiv den Ablassdurchgang 124 abdichtet. Während des Betriebs eines Motors (nicht gezeigt), an dem die Ölwannenbaugruppe 100 befestigt ist, dichtet der Stopfen 126 den Ablassdurchgang 124 derart ab, dass der Stopfen 126 im Allgemeinen eine Fluidverbindung durch den Ablassdurchgang 124 verhindert. Folglich kann der Stopfen 126 innerhalb des Ablassdurchgangs 124 angeordnet sein, wenn die Filterabdeckungsbaugruppe 118 den Filter 102 an der Ölwanne 104 befestigt. Ferner wird der Stopfen 126 im Allgemeinen aus dem Ablassdurchgang 124 herausgenommen, wenn die Filterabdeckungsbaugruppe 118 von der Ölwanne 104 abgenommen wird. Folglich wird eine Fluidverbindung zwischen dem Filterhohlraum 112 und dem Behälter 106 über den Ablassdurchgang 124 ermöglicht, wenn der Stopfen 126 herausgenommen ist. Dementsprechend dichtet der Stopfen 126 den Ablassdurchgang 124 selektiv ab, in Abhängigkeit davon, ob die Filterabdeckungsbaugruppe 118 an der Ölwanne 104 befestigt ist. Wenn gewünscht wird, das Motoröl und/oder den Filter 102 auszutauschen, kann die Abdeckung 120 von der Ölwanne 104 abgeschraubt und der Stopfen 126 aus dem Ablassdurchgang 124 verschoben werden derart, dass ermöglicht wird, dass Öl in den Behälter 106 strömt.

Die Filterabdeckungsbaugruppe 118 kann mit Gewinde versehen sein, z.B. an der Abdeckung 120, und kann ferner komplementäre Gewindegänge an der Ölwanne 104 in Eingriff nehmen, um eine selektive Befestigung der Filterabdeckungsbaugruppe 118 und/oder des Ölfilters 102 an der Ölwanne 104 zu ermöglichen. Die Filterabdeckungsbaugruppe 118 kann von der Ölwanne 104 gelöst und abgenommen werden, wenn es gewünscht wird, Öl oder Schmiermittel aus der Ölwanne 104 abzulassen. Im Allgemeinen kann die Abdeckung 120 gelöst werden, was es ermöglicht, dass die Filterabdeckungsbaugruppe 118 und insbesondere die Filterablassröhre 122, längs der Achse A von dem Ablassdurchgang 124 weg bewegt wird. Dementsprechend wird der Stopfen 126 von dem Ablassdurchgang 124 gelöst oder abgenommen, was es ermöglicht, dass jegliches in dem Filterhohlraum 112 verbleibendes Öl durch den Ablassdurchgang 124 und in den Behälter 106 strömt.

Der Behälter 106 wiederum schließt eine Ablassöffnung 132 ein, die ein selektives Ablassen von Fluid aus der Ölwanne 104 ermöglicht. Die Ablassöffnung 132 kann mit einem Ablass-Stopfen (nicht gezeigt) selektiv blockiert werden, der zum Ablassen der Ölwanne 104 entfernt werden kann. Wie in Fig. 2 gezeigt, kann die Ablassöffnung 132 im Verhältnis zu dem Ablassdurchgang 124 derart angeordnet sein, dass Öl oder andere Fluids im Allgemeinen nach unten von dem Ablassdurchgang 124 zu der Ablassöffnung 132 strömen. Ferner kann die Ablassöffnung 132 im Verhältnis zu dem Behälter 106 derart angeordnet sein, dass im Wesentlichen alles innerhalb des Filters 102 und des Behälters 106 enthaltene Fluid aus der der Ölwanne abgelassen wird, wenn der Ablassdurchgang 124 und die Ablassöffnung 132 geöffnet werden.

Wie in Fig. 2 gezeigt, ist der Stopfen 126 an einem ersten Ende 122a der Filterablassröhre 122 angeordnet, während die Abdeckung 120 an einem zweiten Ende 122b der Filterablassröhre 122 befestigt ist, das im Allgemeinen dem ersten Ende 122a gegenüberliegt. Die Abdeckung 120 hält folglich den Ölfilter 102 innerhalb des Filterhohlraums 112 fest derart, dass gefiltertes Öl aus dem Ölfilter 102 aus dem untersten Ende 102a des Filters 102 und in den Filterhohlraum 112 austritt. Ferner nimmt die Abdeckung 120 ein erstes Ende 102b des Ölfilters 102 in Eingriff, wenn sie den Ölfilter 102 innerhalb des Filterhohlraums 112 befestigt. Das gefilterte Öl tritt folglich über die Filterablassröhre 122 aus dem entgegengesetzten Filterende 120a aus dem Ölfilter 102 aus.

Die Ölwanne 104 kann integral geformt sein, wobei sie zum Beispiel den Behälter 106, den Filterhohlraum 112 und den Ablassdurchgang 124 einschließt. Zum Beispiel kann die Ölwanne 104 aus einem spritzgegossenen Werkstoff, z.B. einem Kunststoffwerkstoff, geformt sein, einschließlich des Behälters 106, des Filterhohlraums 112 und des Ablassdurchgangs 124.

Die Ölwanne 104 kann, wie am besten in Fig. 1A und 1B zu sehen ist, ebenfalls einen Pegelstabdurchgang 130 einschließen, der sich angrenzend an den Behälter 106 befindet. Der Pegelstabdurchgang 130 kann sich im Allgemeinen in den Behälter 106 erstrecken, wodurch er ein selektives Einstecken und Herausnehmen eines Pegelstabes ermöglicht, um im Allgemeinen einen Pegel von Öl oder anderen Schmiermitteln, die innerhalb des Behälters 106 enthalten sind zu überprüfen. Der Pegelstabdurchgang 130 kann integral mit dem Rest der Ölwanne 104 geformt sein.

Wie weiter oben beschrieben, können viele der Bestandteile der Ölwanne 104 im Allgemeinen integral geformt sein. Zusätzlich kann sowohl der Abgabe- als auch der Aufnahmedurchgang 114, 116, wie am besten in Fig. 3 zu sehen ist, teilweise innerhalb eines Abschnitts der Ölwanne 104 längs der oberen Wanne 107 geformt sein. Ein oberer Durchgangsblock 117a des Abgabe- und des Aufnahmedurchgangs 114, 116 kann an einem unteren Durchgangsblock 117b befestigt sein, der integral als ein Teil der Ölwanne 104, z.B. als ein Teil der oberen Wanne 107, geformt ist. Dementsprechend wirken der obere und der untere Durchgangsblock 117a, 117b zusammen, um den Abgabe- und den Aufnahmedurchgang 114, 116 zu definieren. Der obere Durchgangsblock 117a kann durch ein beliebiges Verfahren, das zweckmäßig ist, z.B. ein Spritzgussverfahren unter Verwendung eines ähnlichen Werkstoffs wie bei der Ölwanne 104 und/oder der unteren Durchgangshälfte 117b, geformt sein. Ferner kann der obere Durchgangsblock 117a durch ein beliebiges Verfahren, das zweckmäßig ist, z.B. ein Vibrationsschweißverfahren, an dem unteren Durchgangsblock 117b befestigt sein. Alternativ dazu können die Durchgänge 114, 116 integral innerhalb der Ölwanne 104 geformt sein oder können gesondert geformt sein, z.B. durch Blasformen, Wassertrennformen oder dergleichen, als röhrenförmige Durchgänge, die anschließend an der Ölwanne 104 befestigt werden. Die Ölwanne 104 kann ebenfalls Temperatur- und/oder Drucksensoren (nicht gezeigt) einschließen, die in die Ölwanne 104 integriert sind, z.B. angrenzend an die Durchgänge 114, 116 oder innerhalb derselben.

Dementsprechend gewährleistet die Ölwanne 104 einen im Allgemeinen integralen oder einteiligen Aufbau. Ferner befestigt die Ölwanne 104 den Ölfilter 102 selektiv in einer umgedrehten Stellung, die ein Ablassen des Filters 102 unmittelbar in die Ölwanne 104 ermöglicht. Dementsprechend kann das Öl über die Ablassöffnung 132 aus dem Filter 102 und der Ölwanne 104 abgelassen werden. Sobald die Abdeckung 120 von der Ölwanne 104 gelöst ist und der Stopfen 126 von dem Ablassdurchgang 124 gelöst oder entfernt ist, wird es ermöglicht, das jegliches in dem Filterhohlraum 112 verbleibende Öl in den Behälter 106 strömt. Folglich kann, um die gesamte Ölwannenbaugruppe abzulassen, die den Behälter 106, die obere Wanne 107 und den Filterhohlraum 112 einschließt, die Ablassöffnung 132 geöffnet werden, z.B. durch Entfernen eines Stopfens (nicht gezeigt), und die Filterabdeckungsbaugruppe 118 kann ausreichend gelöst werden, um den Stopfen 126 von dem Ablassdurchgang 124 zu lösen oder zu entfernen. Das Öl aus dem Filter 102 kann folglich nach unten in den Filterhohlraum 112, durch den Ablassdurchgang 124 und in den Hauptbehälter 106 strömen, wo es zusammen mit jeglichem in dem Hauptbehälter 106 und der oberen Wanne 107 enthaltenen Öl über die Ablassöffnung 132 aus der Ölwanne 104 strömen kann. Nachdem im Wesentlichen alles Öl aus dem Filter 102 und der Ölwanne 104 abgelassen ist, kann die Filterabdeckungsbaugruppe 118 entfernt und der Filter 102 entsorgt oder ausgetauscht werden. Die Ölwannenbaugruppe gewährleistet folglich ein vereinfachtes Ablassen der Ölwanne 104 und einen verringerten Bedarf, Verschüttetes wegzuputzen, was sonst schwierig zu verhindern ist, wenn ein Ölfilter aus einer Ölwanne entfernt wird.

## Patentansprüche

1. Ölwanne (104), die Folgendes umfasst:
einen Behälter (106), der eine Ablassöffnung (132) zum selektiven Ablassen von Fluid aus der Ölwanne (104) definiert,
eine Wand (110), die einen Filterhohlraum (112) in Fluidverbindung mit einem Aufnahmedurchgang (114) und einem Abgabedurchgang (116) der Ölwanne (104) definiert, wobei der Aufnahmedurchgang (114) eine Fluidverbindung von dem Behälter (106) zu dem Filterhohlraum (112) ermöglicht und der Abgabedurchgang (116) eine Fluidverbindung von dem Filterhohlraum (112) zu dem Behälter (106) ermöglicht, und
eine Filterabdeckungsbaugruppe (118), die Folgendes einschließt:
eine Abdeckung (120), die den Ölfilter (102) innerhalb des Filterhohlraums (112) befestigt,
eine Filterablassröhre (122), die sich von der Abdeckung (120) durch den Filterhohlraum (112) und in einen Ablassdurchgang (124) erstreckt, wobei der Ablassdurchgang (124) eine Fluidverbindung zwischen dem Filterhohlraum (112) und dem Behälter (106) ermöglicht, wobei die Filterablassröhre (122) dafür konfiguriert ist, gefiltertes Öl von dem Filter (102) aufzunehmen, und
einen an der Filterablassröhre (122) angeordneten Stopfen (126), wobei der Stopfen (126) selektiv den Ablassdurchgang (124) abdichtet.

2. Ölwanne (104) nach Anspruch 1, wobei der Stopfen (126) selektiv den Ablassdurchgang (124) derart abdichtet, dass der Stopfen (126) im Allgemeinen eine Fluidverbindung durch den Ablassdurchgang (124) verhindert, wenn die Filterabdeckungsbaugruppe (118) an der Ölwanne (104) befestigt ist, und der Stopfen (106) im Allgemeinen eine Fluidverbindung durch den Ablassdurchgang (124) derart ermöglicht, dass ein Fluid innerhalb des Filterhohlraums (112) durch den Ablassdurchgang (124) und in den Behälter (106) abläuft, wenn die Filterabdeckungsbaugruppe (118) von der Ölwanne (104) abgenommen ist.

3. Ölwanne (104) nach Anspruch 1, wobei die Ablassöffnung (132) niedriger ist als der Ablassdurchgang (124) und sich die Ablassöffnung (132) in einem untersten Abschnitt des Behälters (106) befindet derart, dass im Wesentlichen alles innerhalb des Filterhohlraums (112) und des Behälters (106) enthaltene Fluid aus der der Ölwanne (104) abgelassen wird, wenn der Ablassdurchgang (124) und die Ablassöffnung (132) offen sind.

4. Ölwanne (104) nach Anspruch 1, wobei der Stopfen (126) an einem ersten Ende der Filterablassröhre (122) angeordnet ist und die Abdeckung (120) an einem zweiten Ende der Filterablassröhre (122) befestigt ist, wobei das erste Ende im Allgemeinen gegenüber dem zweiten Ende angeordnet ist.

5. Ölwanne (104) nach Anspruch 1, wobei die Abdeckung (120) den Ölfilter (102) innerhalb des Filterhohlraums (112) festhält derart, dass Öl aus dem Filter (102) aus einem untersten Ende des Filters (102) in den Filterhohlraum (112) austritt.

6. Ölwanne (104) nach Anspruch 1, wobei der Aufnahmedurchgang (114) selektiv Fluid von dem Behälter (106) zu einem Filtereinlass des Ölfilters (102) weiterleitet, wenn der Ölfilter (102) in dem Filterhohlraum (112) befestigt ist.

7. Ölwanne (104) nach Anspruch 1, wobei der Abgabedurchgang (116) selektiv Fluid von der Filterablassröhre (122) zu dem Behälter (106) weiterleitet.

8. Ölwanne (104) nach Anspruch 1, wobei der Abgabedurchgang (116) selektiv Fluid von einem Auslass für gefiltertes Fluid des Ölfilters (102) weiterleitet, wenn der Ölfilter (102) in dem Filterhohlraum (112) befestigt ist.

9. Ölwanne (104) nach Anspruch 1, wobei die Ölwanne (104) integral geformt ist, wobei sie wenigstens den Behälter (106), den Filterhohlraum (112) und den Ablassdurchgang (124) einschließt.

10. Ölwanne (104) nach Anspruch 9, wobei die Ölwanne (104) aus einem spritzgegossenen Werkstoff geformt ist, wobei sie wenigstens den Behälter (106), den Filterhohlraum (112) und den Ablassdurchgang (124) einschließt.

11. Ölwanne (104) nach Anspruch 9, die ferner einen Pegelstabdurchgang (130), angrenzend an den Behälter (106), umfasst, wobei der Pegelstabdurchgang (130) integral mit der Ölwanne (104) geformt ist.

12. Ölwannenbaugruppe (100), mit einem Ölfilter (102) und einer den Filter (102) aufnehmenden Ölwanne (104) gemäß dem Anspruch 1.

13. Ölwannenbaugruppe (100) nach Anspruch 12, wobei der Stopfen (126) selektiv den Ablassdurchgang (124) derart abdichtet, dass der Stopfen (126) im Allgemeinen eine Fluidverbindung durch den Ablassdurchgang (124) verhindert, wenn die Filterabdeckungsbaugruppe (118) an der Ölwanne (104) befestigt ist, und der Stopfen (126) ermöglicht im Allgemeinen eine Fluidverbindung durch den Ablassdurchgang (124) derart, dass ein Fluid innerhalb des Filterhohlraums (112) durch den Ablassdurchgang (124) und in den Behälter (106) abläuft, wenn die Filterabdeckungsbaugruppe (118) von der Ölwanne (104) abgenommen ist.

14. Ölwannenbaugruppe (100) nach Anspruch 12, wobei die Ablassöffnung (132) niedriger ist als der Ablassdurchgang (124) und sich die Ablassöffnung (132) in einem untersten Abschnitt des Behälters (106) befindet derart, dass im Wesentlichen alles innerhalb des Filterhohlraums (112) und des Behälters (106) enthaltene Fluid aus der Ölwanne (104) abgelassen wird, wenn der Ablassdurchgang (124) und die Ablassöffnung (132) offen sind.

15. Ölwannenbaugruppe (100) nach Anspruch 12, wobei der Stopfen (126) an einem ersten Ende der Filterablassröhre (122) angeordnet ist und die Abdeckung (120) an einem zweiten Ende der Filterablassröhre (122) befestigt ist, wobei das erste Ende im Allgemeinen gegenüber dem zweiten Ende angeordnet ist.

16. Ölwannenbaugruppe (100) nach Anspruch 12, wobei die Abdeckung (102) den Ölfilter (102) innerhalb des Filterhohlraums (112) festhält derart, dass Öl aus dem Filter (102) aus einem untersten Ende des Filters (102) in den Filterhohlraum (112) 112 austritt.

17. Ölwannenbaugruppe (100) nach Anspruch 12, wobei die Abdeckung (120) ein erstes Ende des Ölfilters (102) in Eingriff nimmt, wodurch sie den Ölfilter (102) innerhalb des Filterhohlraums (112) befestigt derart, dass gefiltertes Öl aus dem Filter (102) aus einem dem ersten Ende des Ölfilters (102) gegenüberliegenden Ende in den Röhrenabschnitt austritt.

18. Ölwannenbaugruppe (100) nach Anspruch 12, wobei die Ölwanne (104) integral geformt ist, wobei sie wenigstens den Behälter (106), den Filterhohlraum (112) und den Ablassdurchgang (124) einschließt.

19. Ölwannenbaugruppe (100) nach Anspruch 18, wobei die Ölwanne (104) aus einem spritzgegossenen Werkstoff geformt ist, wobei sie wenigstens den Behälter (106), den Filterhohlraum (112) und den Ablassdurchgang (124) einschließt.

20. Ölwannenbaugruppe (100), mit einer einen Ölfilter (102) aufnehmenden Ölwanne (104) gemäß dem Anspruch 12,
**gekennzeichnet durch** eine,
eine Filterabdeckungsbaugruppe (118), die Folgendes einschließt:
eine Abdeckung (120), die den Ölfilter (102) innerhalb des Filterhohlraums (112) befestigt derart, dass Öl aus dem Ölfilter (102) aus dem untersten Ende des Filters (102) in den Filterhohlraum (112) austritt,
eine Filterablassröhre (122), die sich von einem ersten Ende, angrenzend an die Abdeckung (120), aus erstreckt, wobei sich die Filterablassröhre (122) **durch** den Filterhohlraum (112) und in einen Ablassdurchgang (124) erstreckt, wobei der Ablassdurchgang (124) eine Fluidverbindung zwischen dem Filterhohlraum (112) und dem Behälter (106) ermöglicht, wobei die Filterablassröhre (122) dafür konfiguriert ist, gefiltertes Öl von dem Filter (102) aufzunehmen, und
einen an einem zweiten Ende der Filterablassröhre (122) angeordneten Stopfen (126), wobei das zweite Ende im Allgemeinen gegenüber dem ersten Ende angeordnet ist, wobei der Stopfen (126) selektiv den Ablassdurchgang (124) derart abdichtet, dass der Stopfen (126) im Allgemeinen eine Fluidverbindung **durch** den Ablassdurchgang (124) verhindert, wenn die Filterabdeckungsbaugruppe (118) den Filter (102) an der Ölwanne (104) befestigt, und der Stopfen (126) im Allgemeinen eine Fluidverbindung durch den Ablassdurchgang (124) derart ermöglicht, dass ein Fluid innerhalb des Filterhohlraums (112) **durch** den Ablassdurchgang (124) und in den Behälter (106) abläuft, wenn die Filterabdeckungsbaugruppe (118) von der Ölwanne (104) abgenommen ist,
wobei die Ablassöffnung (132) niedriger ist als der Ablassdurchgang (124) und sich die Ablassöffnung (132) in einem untersten Abschnitt des Behälters (106) befindet derart, dass im Wesentlichen alles innerhalb des Filterhohlraums (112) und des Behälters (106) enthaltene Fluid aus der Ölwanne (104) abgelassen wird, wenn der Ablassdurchgang (124) und die Ablassöffnung (132) offen sind, und
wobei die Ölwanne (104) integral aus einem spritzgegossenen Werkstoff geformt ist, wobei sie wenigstens den Behälter (106), den Filterhohlraum (112) und den Ablassdurchgang (124) einschließt.

## Claims

1. Oil sump (104) comprising the following:
a container (106) which defines a drainage opening (132) for selectively draining fluid out of the oil sump (104),
a wall (110) which defines a filter cavity (112) in fluid connection with a receiving passage (114) and a discharge passage (116) of the oil sump (104), wherein the receiving passage (114) allows a fluid connection from the container (106) to the filter cavity (112) and the discharge passage (116) allows a fluid connection from the filter cavity (112) to the container (106), and
a filter cover assembly (118) which includes the following:
a cover (120) which fastens the oil filter (102) inside the filter cavity (112),
a filter drainage tube (122) which extends from the cover (120) through the filter cavity (112) and into a drainage passage (124), wherein the drainage passage (124) allows a fluid connection between the filter cavity (112) and the container (106), wherein the filter drainage tube (122) is configured to receive filtered oil from the filter (102), and
a stopper (126) which is arranged on the filter drainage tube (122), wherein the stopper (126) selectively seals off the drainage passage (124).

2. Oil sump (104) according to Claim 1, wherein the stopper (126) selectively seals off the drainage passage (124) in such a manner that the stopper (126) generally prevents a fluid connection through the drainage passage (124) when the filter cover assembly (118) is fastened to the oil sump (104), and the stopper (106) generally allows a fluid connection through the drainage passage (124) in such a manner that a fluid inside the filter cavity (112) runs through the drainage passage (124) and into the container (106) when the filter cover assembly (118) is accommodated by the oil sump (104).

3. Oil sump (104) according to Claim 1, wherein the drainage opening (132) is lower than the drainage passage (124) and the drainage opening (132) is situated in the bottom section of the container (106) in such a manner that essentially all the fluid contained in the filter cavity (112) and the container (106) is drained out of the oil sump (104) when the drainage passage (124) and the drainage opening (132) are open.

4. Oil sump (104) according to Claim 1, wherein the stopper (126) is arranged at a first end of the filter drainage tube (122) and the cover (120) is fastened to a second end of the filter drainage tube (122), wherein the first end is generally arranged opposite the second end.

5. Oil sump (104) according to Claim 1, wherein the cover (120) holds the oil filter (102) fast inside the filter cavity (112) in such a manner that oil exits from the filter (102) from the bottom end of the filter (102) into the filter cavity (112).

6. Oil sump (104) according to Claim 1, wherein the receiving passage (114) selectively conducts fluid from the container (106) to a filter inlet of the oil filter (102) when the oil filter (102) is fastened in the filter cavity (112).

7. Oil sump (104) according to Claim 1, wherein the discharge passage (116) selectively conducts fluid from the filter drainage tube (122) to the container (106).

8. Oil sump (104) according to Claim 1, wherein the discharge passage (116) selectively conducts fluid from an outlet for filtered fluid of the oil filter (102) when the oil filter (102) is fastened in the filter cavity (112).

9. Oil sump (104) according to Claim 1, wherein the oil sump (104) is integrally formed, wherein it includes at least the container (106), the filter cavity (112) and the drainage passage (124).

10. Oil sump (104) according to Claim 9, wherein the oil sump (104) is formed from an injection-moulded material, wherein it includes at least the container (106), the filter cavity (112) and the drainage passage (124).

11. Oil sump (104) according to Claim 9, which further comprises a dip stick passage (130) adjacent to the container (106), wherein the dip stick passage (130) is formed integrally with the oil sump (104).

12. Oil sump assembly (100), having an oil filter (102) and an oil sump (104) accommodating the filter (102) according to Claim 1.

13. Oil sump assembly (100) according to Claim 12, wherein the stopper (126) selectively seals off the drainage passage (124) in such a manner that the stopper (126) generally prevents a fluid connection through the drainage passage (124) when the filter cover assembly (118) is fastened to the oil sump (104), and the stopper (126) generally allows a fluid connection through the drainage passage (124) in such a manner that a fluid inside the filter cavity (112) runs through the drainage passage (124) and into the container (106) when the filter cover assembly (118) is accommodated by the oil sump (104).

14. Oil sump assembly (100) according to Claim 12, wherein the drainage opening (132) is lower than the drainage passage (124) and the drainage opening (132) is situated in the bottom section of the container (106) in such a manner that essentially all the fluid contained in the filter cavity (112) and the container (106) is drained out of the oil sump (104) when the drainage passage (124) and the drainage opening (132) are open.

15. Oil sump assembly (100) according to Claim 12, wherein the stopper (126) is arranged at a first end of the filter drainage tube (122) and the cover (120) is fastened to a second end of the filter drainage tube (122), wherein the first end is generally arranged opposite the second end.

16. Oil sump assembly (100) according to Claim 12, wherein the cover (102) holds the oil filter (102) fast inside the filter cavity (112) in such a manner that oil exits from the filter (102) from the bottom end of the filter (102) into the filter cavity (112).

17. Oil sump assembly (100) according to Claim 12, wherein the cover (120) engages with a first end of the oil filter (102), as a result of which it fastens the oil filter (102) inside the filter cavity (112) in such a manner that filtered oil exits from the filter (102) from an end opposite the first end of the oil filter (102) into the tube section.

18. Oil sump assembly (100) according to Claim 12, wherein the oil sump (104) is integrally formed, wherein it includes at least the container (106), the filter cavity (112) and the drainage passage (124).

19. Oil sump assembly (100) according to Claim 18, wherein the oil sump (104) is formed from an injection-moulded material, wherein it includes at least the container (106), the filter cavity (112) and the drainage passage (124).

20. Oil sump assembly (100), having an oil sump (104) accommodating an oil filter (102) according to Claim 12,
**characterised by** a filter cover assembly (118) which includes the following:
a cover (120) which fastens the oil filter (102) inside the filter cavity (112) in such a manner that oil exits from the oil filter (102) from the bottom end of the filter (102) into the filter cavity (112),
a filter drainage tube (122) which extends from a first end, adjacent to the cover (120), wherein the filter drainage tube (122) extends through the filter cavity (112) and into a drainage passage (124), wherein the drainage passage (124) allows a fluid connection between the filter cavity (112) and the container (106), wherein the filter drainage tube (122) is configured to receive filtered oil from the filter (102), and
a stopper (126) which is arranged at a second end of the filter drainage tube (122), wherein the second end is generally arranged opposite the first end, wherein the stopper (126) selectively seals off the drainage passage (124) in such a manner that the stopper (126) generally prevents a fluid connection through the drainage passage (124) when the filter cover assembly (118) fastens the filter (102) to the oil sump (104), and the stopper (126) generally allows a fluid connection through the drainage passage (124) in such a manner that a fluid inside the filter cavity (112) runs through the drainage passage (124) and into the container (106) when the filter cover assembly (118) is accommodated by the oil sump (104),
wherein the drainage opening (132) is lower than the drainage passage (124) and the drainage opening (132) is situated in the bottom section of the container (106) in such a manner that essentially all the fluid contained in the filter cavity (112) and the container (106) is drained out of the oil sump (104) when the drainage passage (124) and the drainage opening (132) are open, and
wherein the oil sump (104) is formed integrally from an injection-moulded material, wherein it includes at least the container (106), the filter cavity (112) and the drainage passage (124).

## Revendications

1. Carter (104), qui comprend ce qui suit :
un conteneur (106), qui définit une ouverture de vidange (132) pour la vidange sélective de fluide hors du carter (104),
une paroi (110), qui définit une chambre creuse de filtre (112) en liaison de fluide avec un passage d'admission (114) et un passage d'échappement (116) du carter (104), dans lequel le passage d'admission (114) permet une liaison de fluide depuis le récipient (106) vers la chambre creuse de filtre (112) et le passage d'échappement (116) permet une liaison de fluide de la chambre creuse de filtre (112) au conteneur (106), et
un module de couvercle de filtre (118), qui englobe ce qui suait :
un couvercle (120), qui fixe le filtre à huile (102) à l'intérieur de la chambre creuse de filtre (112),
une tuyauterie de vidange de filtre (122), qui s'étend du couvercle (120) à travers la chambre creuse de filtre (112) et dans un passage de vidange (124), dans lequel le passage de vidange (124) permet une liaison de fluide entre la chambre creuse de filtre (112) et le conteneur (106), dans lequel la tuyauterie de vidange de filtre (122) est configurée pour recevoir l'huile filtrée provenant du filtre (102), et
un bouchon (126) disposé sur la tuyauterie de vidange de filtre (122), dans lequel le bouchon (126) obture sélectivement le passage de vidange (124).

2. Carter (104) selon la revendication 1, dans lequel le bouchon (126) obture sélectivement le passage de vidange (124) de telle sorte que le bouchon (126) empêche généralement une liaison de fluide à travers le passage de vidange (124), quand le module de couvercle de filtre (118) est fixé sur le carter (104), et le bouchon (106) permet généralement une liaison de fluide à travers le passage de vidange (124), de telle sorte qu'un fluide à l'intérieur de la chambre creuse de filtre (112) s'écoule à travers le passage de vidange (124) et dans le conteneur (106), quand le module de couvercle de filtre (118) est retiré du carter (104).

3. Carter (104) selon la revendication 1, dans lequel l'ouverture de vidange (132) est plus petite que le passage de vidange (124) et l'ouverture de vidange (132) s'étend dans une portion la plus basse du récipient (106) se trouve de telle sorte que essentiellement tout le fluide contenu à l'intérieur de la chambre creuse de filtre (112) et du conteneur (106) est vidangé hors du carter (104), quand le passage de vidange (124) et l'ouverture de vidange (132) sont ouverts.

4. Carter (104) selon la revendication 1, dans lequel le bouchon (126) est disposé à une première extrémité de la tuyauterie de vidange de filtre (122), et le couvercle (120) est fixé à une deuxième extrémité de la tuyauterie de vidange de filtre (122), dans lequel la première extrémité est disposée généralement en vis-à-vis de la deuxième extrémité.

5. Carter (104) selon la revendication 1, dans lequel le couvercle (120) maintient immobile le filtre à huile (102) à l'intérieur de la chambre creuse de filtre (112), de telle sorte que l'huile provenant du filtre (102) ressorte hors d'une extrémité inférieure du filtre (102) dans la chambre creuse de filtre (112).

6. Carter (104) selon la revendication 1, dans lequel le passage d'admission (114) transfère sélectivement un fluide du conteneur (106) à une admission de filtre du filtre à huile (102), quand le filtre à huile (102) est fixé dans la chambre creuse de filtre (112).

7. Carter (104) selon la revendication 1, dans lequel le passage d'échappement (116) transfère sélectivement un fluide de la tuyauterie de vidange de filtre (122) au conteneur (106).

8. Carter (104) selon la revendication 1, dans lequel le passage d'échappement (116) transfère sélectivement un fluide d'un échappement pour fluide filtré du filtre à huile (102), quand le filtre à huile (102) est fixé dans la chambre creuse de filtre (112).

9. Carter (104) selon la revendication 1, dans lequel le carter (104) est formé en un seul tenant, dans lequel il englobe au moins le conteneur (106), la chambre creuse de filtre (112) et le passage de vidange (124).

10. Carter (104) selon la revendication 9, dans lequel le carter (104) est formé en plastique moulé par injection, dans lequel il englobe au moins le conteneur (106), la chambre creuse de filtre (112) et le passage de vidange (124).

11. Carter (104) selon la revendication 9, qui comprend en outre un passage à jauge (130), adjacent au conteneur (106), dans lequel le passage à jauge (130) est formé en un seul tenant avec le carter (104).

12. Module de carter (100), comportant un filtre à hile (102) et un carter (104) renfermant le filtre (102) selon la revendication 1.

13. Module de carter (100) selon la revendication 12, dans lequel le bouchon (126) obture sélectivement le passage de vidange (124) de telle sorte que le bouchon (126) empêche généralement une liaison de fluide à travers le passage de vidange (124), quand le module de couvercle de filtre (118) est fixé sur le carter (104), et le bouchon (126) permet généralement une liaison de fluide à travers le passage de vidange (124) de telle sorte qu'un fluide à l'intérieur de la chambre creuse de fluide (112) s'écoule à travers le passage d'échappement (124) et dans le conteneur (106), quand le module de couvercle de filtre (118) est retiré du carter (104).

14. Module de carter (100) selon la revendication 12, dans lequel l'ouverture de vidange (132) est plus petite que le passage de vidange (124) et l'ouverture de vidange (132) se trouve dans une portion la plus basse du conteneur (106), de telle sorte que essentiellement tout le fluide contenu à l'intérieur de la chambre creuse de filtre (112) et du conteneur (106) est vidangé hors du carter (104), quand le passage de vidange (124) et l'ouverture de vidange (132) sont ouverts.

15. Module de carter (100) selon la revendication 12, dans lequel le bouchon (126) est disposé à une première extrémité de la tuyauterie de vidange de filtre (122) et le couvercle (120) est fixé à une deuxième extrémité de la tuyauterie de vidange de filtre (122), dans lequel la première extrémité est disposée généralement vis-à-vis de la deuxième extrémité.

16. Module de carter (100) selon la revendication 12, dans lequel le couvercle (102) maintient immobile le filtre à huile (102) à l'intérieur de la chambre creuse de filtre (112), de telle sorte que l'huile provenant du filtre (102) ressort hors d'une extrémité la plus basse du filtre (102) dans la chambre creuse de filtre (112).

17. Module de carter (100) selon la revendication 12, dans lequel le couvercle (120) vient en prise avec une première extrémité du filtre à huile (102), moyennant quoi le filtre à huile (102) est fixé à l'intérieur de la chambre creuse de filtre (112) de telle sorte que de l'huile filtrée provenant du filtre (102) ressorte hors d'une extrémité en vis-à-vis de la première extrémité du filtre à huile (102) dans la portion de tuyauterie.

18. Module de carter (100) selon la revendication 12, dans lequel le carter (104) est formé en un seul tenant, dans lequel il englobe au moins le conteneur (106), la chambre creuse de filtre (112) et le passage de vidange (124).

19. Module de carter (100) selon la revendication 18, dans lequel le carter (104) est formé en plastique moulé par injection, dans lequel il englobe au moins le conteneur (106), la chambre creuse de filtre (112) et le passage de vidange (124).

20. Module de carter (100), comportant un carter (104) renfermant un filtre à huile (102) selon la revendication 12,
**caractérisé par** un module de couvercle de filtre (118), qui englobe ce qui suit :
un couvercle (120), qui fixe le filtre à huile (102) à l'intérieur de la chambre creuse de filtre (112) de telle sorte que l'huile provenant du filtre à huile (102) ressorte hors de l'extrémité la plus basse du filtre (102) dans la chambre creuse de filtre (112),
une tuyauterie de vidange de filtre (122), qui s'étend d'une première extrémité, adjacente au couvercle (120), vers l'extérieur, dans lequel la tuyauterie de vidange de filtre (122) s'étend à travers la chambre creuse de filtre (112) et dans un passage de vidange (124), dans lequel le passage de vidange (124) permet une liaison de fluide entre la chambre creuse de filtre (112) et le contenu (106), dans lequel la tuyauterie de vidange de filtre (122) est configurée afin de recevoir l'huile filtrée du filtre (102),
un bouchon (126) disposé à une deuxième extrémité de la tuyauterie de vidange de filtre (122), dans lequel la deuxième extrémité est disposée généralement en vis-à-vis de la première extrémité, dans lequel le bouchon (126) obture sélectivement le passage de vidange (124) de telle sorte que le bouchon (126) empêche généralement une liaison de fluide à travers le passage de vidange (124), quand le module de couvercle de filtre (118) fixe le filtre (102) au carter (104), et le bouchon (126) permet généralement une liaison de fluide à travers le passage de vidange (124) de telle sorte qu'un fluide à l'intérieur de la chambre creuse de filtre (112) s'écoule à travers le passage de vidange (124) et dans le conteneur (106), quand le module de couvercle de filtre (118) est retiré du carter (104),
dans lequel l'ouverture de vidange (132) est plus petite que le passage de vidange (124) et l'ouverture de vidange (132) se trouve dans une portion la plus basse du conteneur (106), de telle sorte qu'essentiellement tout le fluide contenu à l'intérieur de la chambre creuse de filtre (112) et du conteneur (106) soit vidangé hors du carter (104), quand le passage de vidange (124) et l'ouverture de vidange (132) sont ouverts, et
dans lequel le carter (104) est formé en un seul tenant en plastique moulé par injection, dans lequel il englobe au moins le conteneur (106), la chambre creuse de filtre (112) et le passage de vidange (124).
